# EUROPÄISCHE PATENTSCHRIFT

(11) **EP 1 163 918 B1**
(45) Veröffentlichungstag und Bekanntmachung des Hinweises auf die Patenterteilung: **11.04.2007**
(21) Anmeldenummer: 01113789.0
(22) Anmeldetag: 06.06.2001
(51) Int. Cl.: A61M 3/00, B65D 77/24, A61C 5/06

(54) **Vorrichtung zum Lagern und Applizieren einer ein- oder mehrkomponentigen fliessfähigen dentalen Substanz**
Device for storage and application of a fluid dental substance of one or more components
Dispositif de conservation et application d'une substance dentale fluide d'un ou plusieurs composants

(30) Priorität: 16.06.2000 DE 10029830
(43) Veröffentlichungstag der Anmeldung: 19.12.2001
(73) Patentinhaber: VOCO GmbH, 27472 Cuxhaven (DE)
(72) Erfinder: Plaumann, Manfred Thomas, 27476 Cuxhafen (DE); Leiner, Uwe, 27634 Midlum (DE)

(56) Entgegenhaltungen:
- DE-A- 1 566 294
- DE-A- 2 539 291
- DE-A- 19 722 765
- DE-B- 2 400 970
- US-A- 2 527 992
- US-A- 3 625 349
- US-A- 3 638 918
- US-A- 3 762 540
- US-A- 5 100 320
- US-A- 5 396 986

## Beschreibung

Die Erfindung betrifft eine Vorrichtung und ein Verfahren zum Lagern und Applizieren einer mehrkomponentigen fließfähigen dentalen Substanz. Insbesondere zur Applikation mehrkomponentiger dentaler Adhäsiv- oder Befestigungssubstanzen. Aber auch für die Lagerung und Applikation von Zahnlacken, fließfähigen Füllungsmaterialien oder Desensitizer ist die erfindungsgemäße Vorrichtung geeignet.

In vielen verschiedenen Anwendungsfällen, vor allem in der Zahnmedizin, ist es notwendig, daß eine geringe Menge einer fließfähigen, mitunter pastösen, Substanz auf unterschiedliche Oberflächen, wie menschliche Haut, Zahnfleisch oder Zähne aufgetragen werden muß. Häufig muß die Substanz erst kurz vor dem Auftragen aus verschiedenen Komponenten angemischt werden, wie z.B. zweckmäßigerweise bei zweikomponentigen mischbaren dentalen Dentin- und Schmelzadhäsiven. Die dazu verwendeten Applikationsvorrichtungen sind häufig aus Sterilitätsgründen als Einwegartikel zu gebrauchen. Dabei sind mitunter sehr hohe Stückzahlen von mehreren Millionen pro Jahr bei der Herstellung zu erwarten. Aus wirtschaftlichen Gründen sollten die Applikationsvorrichtungen daher einfach in der Herstellung sein und nur geringe Kosten verursachen.
Um eine Kontamination der zu applizierenden Substanz auszuschließen, werden vorgefertigte, mit geringen Mengen vorportionierte Vorrichtungen, Behältnisse oder Blisterverpackungen angeboten. Dabei stehen sowohl ein- als auch zweikomponentige, anzumischende Materialsysteme zur Verfügung, wie sie z.B. in DE 3717512 oder US 4812067 dargestellt sind.
Darüber hinaus sind verschiedene Blisterverpackungen und Applikationssysteme für zahnmedizinische Anwendungen bekannt, wie z.B. aus EP 770021 oder EP 895943. Nachteilig ist bei diesen Applikationssystemen, daß sie einerseits nur für Einkomponentenmaterialien gefertigt sind und andererseits für Zweikomponentenmaterialien einen aufwendigen und fehlerbehafteten Mischvorgang implizieren. Bei der in EP 895943 beschriebenen Vorrichtung zum Lagern und Auftragen zwei zu mischender fließfähiger Substanzen befinden sich die zu mischenden Substanzen in zwei verschiedenen Kammern, das Auftraggerät in einer weiteren dritten Kammer. Alle Kammern sind hintereinander über selektiv zu öffnende Durchgangsbereiche (Sollbruchstellen) verbunden. Zur Anmischung und Auftragung muß zunächst die eine Substanz aus der ersten Kammer vollständig in die zweite Kammer durch den ersten Durchgangsbereich überführt werden. Danach muß die gemischte Substanz aus den Kammern 1 und 2 vollständig in die Kammer 3 gedrückt werden, um das Auftraggerät vollständig zu benetzen. Anschließend entfernt der Anwender das Auftraggerät aus der Kammer 3 zur Applikation der 2-komponentigen Substanz. Dem Anwender wird dabei eine hohe Aufmerksamkeit abverlangt, damit er alle Anwendungsvorgänge korrekt durchführt. Nachteilig wirkt sich bei der beschriebenen Ausführungsform aus, daß das vollständige Überführen der jeweiligen Substanzen in die Kammern sichergestellt sein muß, damit sich das richtige Mischungsverhältnis einstellt. Weiterer Nachteil ist, daß ein Rückfließen der Substanzen in die Kammern nicht ausgeschlossen werden kann. Ferner ist der selektiv zu öffnende Durchgangsbereich hinsichtlich der Dichtigkeit bei der Lagerung von Substanzen mit einem relativ hohen Dampfdruck ungeeignet. Beispielsweise könnte bei starken Temperaturänderungen der Druck in den Kammern so stark ansteigen, daß der selektive Durchgangsbereich sich ungewollt öffnet. Weiterhin werden in EP 895943 keine Vorrichtungen für mehr als zweikomponentige Systeme offenbart.

In EP 967929 wird ein Einkomponenten-Applikationssystem dargestellt, indem eine geringe Menge (etwa 0,1 ml) eines dentalen Adhäsivs in einem Einmalbehältnis aus Kunststoff untergebracht ist. Der Behälter ist mit einem abdrehbaren Verschluß flüssigkeitsdicht verschlossen. Zusätzlich ist der Behälter mit einem Applikationsgerät, z.B. einem Pinsel, in einer gasdichten Folie eingeschweißt. Bei der Applikation muß der Anwender zunächst die Folie und anschließend den Behälterverschluß entfernen. Anschließend muß er mit dem Applikationsgerät in den Behälter eintauchen um die zu applizierende Substanz aufzunehmen. Nachteilig bei dem dargestellten Lager- und Applikationssystem ist die Material- und Verpackungsfülle, die ein Abfallentsorgungsproblem darstellt. Aufgrund der verschiedenen Verpackungen ist die Handhabung für den Anwender kompliziert und mühevoll. Des weiteren ist in EP 967929 nur ein Einkomponentensystem beschrieben.

Eine Vorrichtung zur Applikation von dentalen Adhäsiven ist von der Firma Vivadent, Schaan/Liechtenstein, unter dem Namen "Excite - soft touch single dose" bekannt. Die Vorrichtung umfaßt ein Behälter, indem sich ein einkomponentiges fließfähiges Dentaladhäsiv befindet. Durch die obere Behälteröffnung kann mittels eines Applikationspinsels ein im Behälter befindlicher Verschluß zum Behälterboden verschoben werden. Das im Behälter befindliche einkomponentige Adhäsiv strömt beim Herunterdrücken durch Kanäle am Verschluß vorbei in den Raum oberhalb des Verschlusses. Dort kann das Adhäsiv vom Auftraggerät, dem Pinsel, aufgenommen und appliziert werden. Die beschriebene Vorrichtung hat den Nachteil, daß sie für Substanzen mit einem hohen Dampfdruck, wie beispielsweise acetonhaltige Substanzen, aufgrund mangelnder Dichtigkeit der Behältnisse nicht geeignet sind. Des weiteren wird nur eine Vorrichtung für ein einkomponentiges Material offenbart.

Bei den dargestellten Vorrichtungen zur Lagerung und Applikation aus dem Stand der Technik werden Behältnisse aus Kunststoff, z.B. EP 967929, oder Folienbehälter, z.B. EP 895943, verwendet. Es ist bekannt, daß Gase wie z.B. Sauerstoff oder verdampfbare Lösungsmittel, z.B. Aceton, durch Kunststoff hindurch diffundieren können. Die Abdichtungsproblematik stellt damit eine hohe Anforderung an die Fertigung der Applikationsvorrichtungen, insbesondere wenn es sich bei den zu applizierenden Substanzen um Substanzen handelt, die einen relativ hohen Dampfdruck haben. Die aus dem Stand der Technik bekannten Folien, wie sie beispielsweise für Blisterverpackungen bekannt sind, sind gasdicht, so daß die Gasdiffusion unterbunden wird. In EP 895943 wird das Applikationsgerät, der Auftragpinsel, jedoch mit in die Folie eingeschweißt und das Griffstück ragt zur Entnahme aus der Folienverpackung heraus. Eine vollständige, auch bei starken Temperaturänderungen gasdichte Umhüllung der Substanzen mit gasdichter Folie wird daher in keiner der aus dem Stand der Technik bekannten Applikationsvorrichtungen verwirklicht.

Nächstliegender Stand der Technik ist DE 3208786. DE 3208786 offenbart ein Zweikammerbehältnis bestehend aus einem Behälter und einem Stempel, der als Hohlkolben innerhalb des Behälters beweglich geführt ist. Eine zerstörbare Trennwand teilt den Behälter in zwei Kammern, in denen sich die zu mischenden Komponenten (A, B) befinden. Der Hohlkolben kann mit Durchbrüchen versehen sein, die ein Ausgießen der Substanz ermöglichen. Zum Unterschied zu DE 3208786 besitzt die erfindungsgemäße Vorrichtung a. im Gehäuse eine Öffnung, zur Entnahme der zu applizierenden Substanz mit Hilfe eines geeigneten Applikationsgerätes, b. mindestens ein Folienbeutel, der die Komponente(n) enthält, und c. eine ständig geöffnete Öffnung, durch die ein Druckausgleich beim Herunterdrücken des Gehäuses möglich ist.

Ausgehend vom nächstliegenden Stand der Technik findet der Fachmann in DE 3723985 lediglich einen Hinweis, zur Aufnahme von Flüssigkeiten Folienbeutel zu verwenden.
In DE 3723985 wird nicht offenbart, daß die Öffnung für die Aufnahme und Entnahme der Substanz mit Hilfe eines geeigneten Applikationsgerätes geschaffen sein muß. Weiterhin wird in DE 3723985 keine Möglichkeit offenbart, wie der Fachmann ohne mechanische Schwingungen, Schütteln, die zu applizierende Substanz herstellen kann. Es wird auch kein Lösungsansatz gegeben, um Komponenten mit hohem Dampfdruck sicher zu lagern. Der Fachmann erkennt lediglich, daß Flüssigkeiten in Folienbeutel eingeschweißt vorliegen. Ein Vorteil gegenüber den Kammern A und B aus DE 3208786, die durch eine Trennwand getrennt sind, gegenüber den durch eine Folienwand getrennten Kammern, wird nicht offensichtlich. Weiterhin erhält der Fachmann durch DE 3723985 keinen Hinweis, wie er die Probleme der Aktivierung, d.h. das Auftrennen der Trennwand durch Druck auf den Stempel, ohne zusätzliche Probleme bei der Dichtigkeit und/oder bei druckempfindlichen Substanzen zu schaffen, lösen könnte.

In DE19722765 wird eine Mehrkammer. Ampule mit einer einen Pinsel enthaltenden Kammer offenbart. In US3762540 wird eine Kopsel, die einen Folienbeutel enthält, offenbart.

Es stellt sich die objektive Aufgabe eine Vorrichtung bereit zu stellen, die mit wenigen Handgriffen die Bereitstellung und Applikation von zwei- oder mehrkomponentigen dentalen Substanzen gewährleistet, die Lagerung und Applikation von Substanzen sicherstellt, an die besondere Abdichtungsvorkehrungen zu stellen sind, die Lagerung und Applikation von druckempfindlichen Substanzen ermöglicht und die zudem einfach in der Herstellung und in der Befüllung mit den Komponenten ist und keinen vermeidbaren Abfall verursacht.

Die erfindungsgemäße Lösung dieser Aufgaben ist durch eine Vorrichtung und Verfahren entsprechend den Merkmalen des Anspruch 1 gegeben.

Die dargestellten Aufgaben werden durch die erfindungsgemäße Vorrichtung gelöst. Durch einfaches Herunterdrücken des Gehäuses (2) werden der oder die Folienbeutel (6) geöffnet und die Komponenten vermischen sich automatisch durch den Druck und dem Hochsteigen in der Öffnung (4) des Gehäuses (2). Indem die Öffnung (4) im beweglichen Gehäuse dergestalt ist, daß ein Pinsel, bequem und einfach eingeführt werden kann, kann die Substanz aufgenommen und damit sofort appliziert werden. Der durch das Herunterdrücken des Gehäuses entstehende Druck kann jederzeit durch die nicht verschlossenen Öffnung (4) ausgeglichen werden. Für die Lagerung von Substanzen mit Abdichtigkeitsproblemen ist die nicht verschlossenen Öffnung kein Problem, da diese Substanzen in gasdichten Folienbeuteln, wie sie aus dem Stand der Technik bekannt sind, vorliegen. Durch die Bereitstellung der Substanzen in Folienbeuteln ergibt sich zudem der Vorteil, daß die Substanzen getrennt, ohne in Berührung miteinander zu kommen, in die Vorrichtung eingefüllt werden können.

Weiterhin ist die erfindungsgemäße Vorrichtung ohne zusätzliche Verschlüsse versehen, die eine einfache Handhabung zur Folge haben und zusätzlichen Abfall vermeiden.

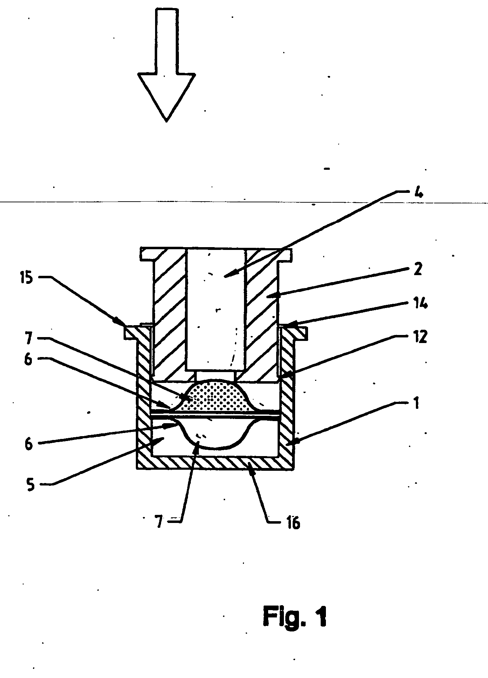

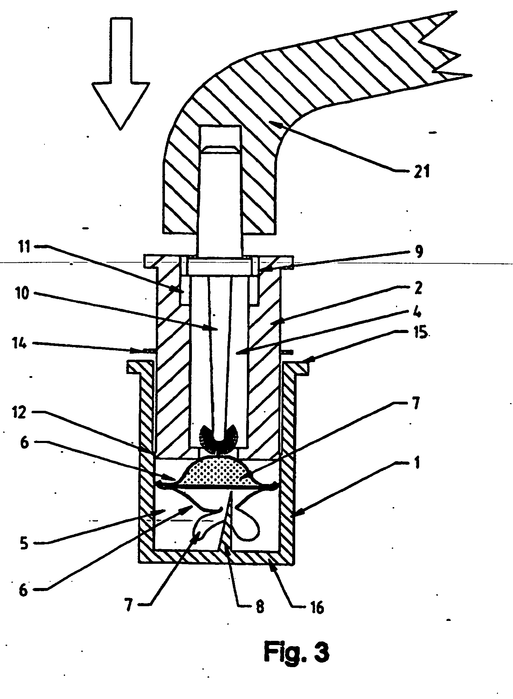

Anhand der nachfolgenden, nicht maßstabsgerechten Abbildungen Fig.1 bis Fig.17 werden die erfindungsgemäße Vorrichtung, bevorzugte Ausführungsformen und das Verfahren näher erläutert ohne einschränkend zu wirken.

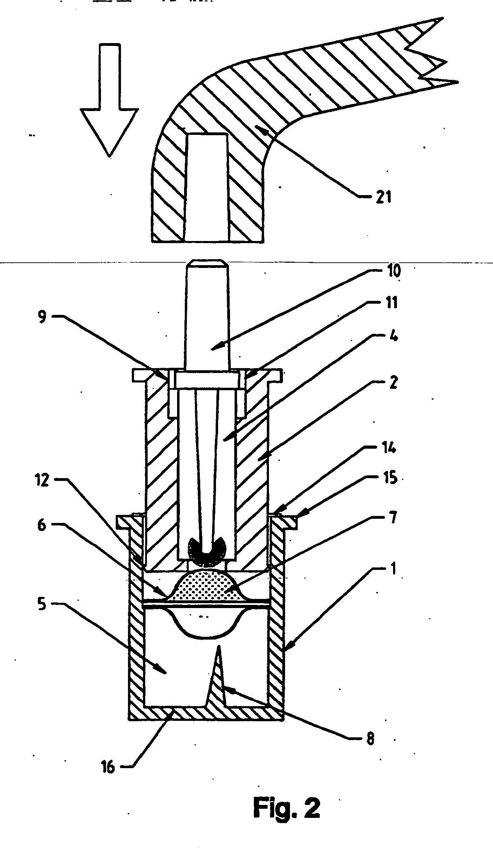

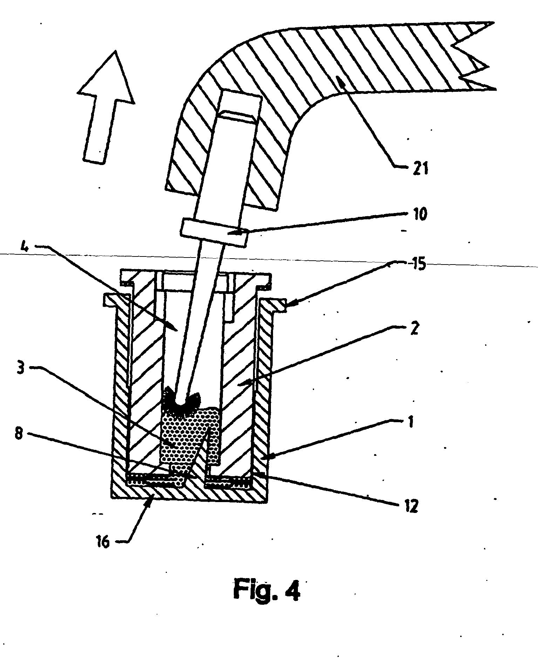

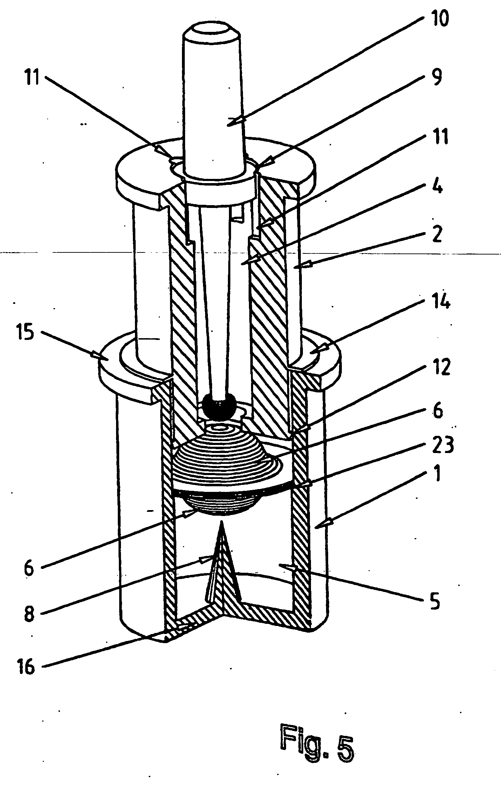

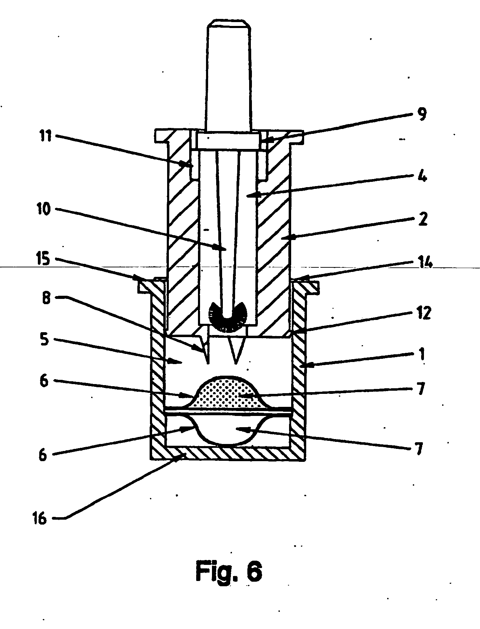

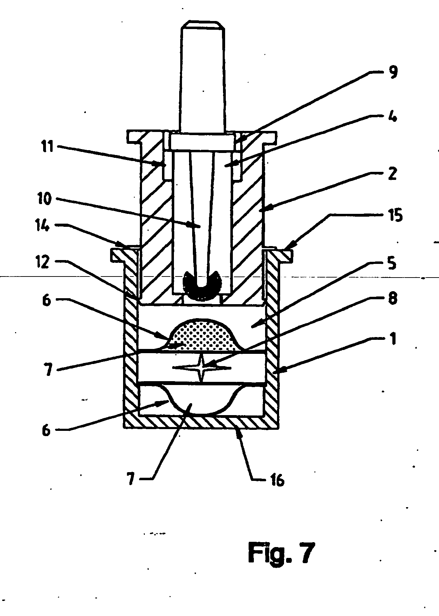

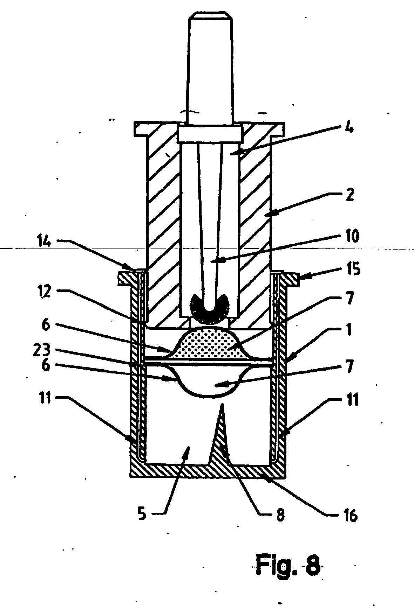

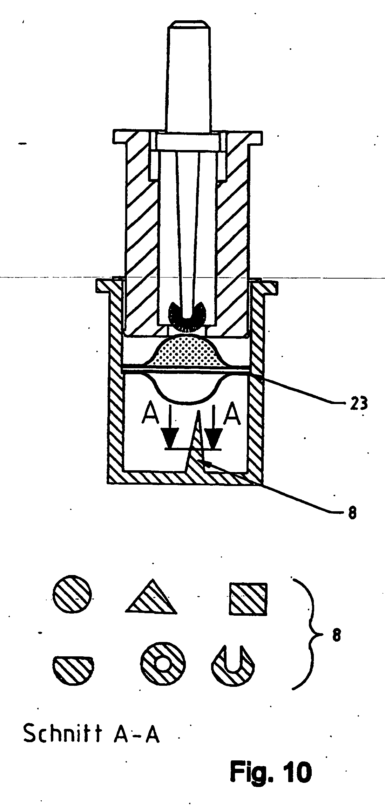

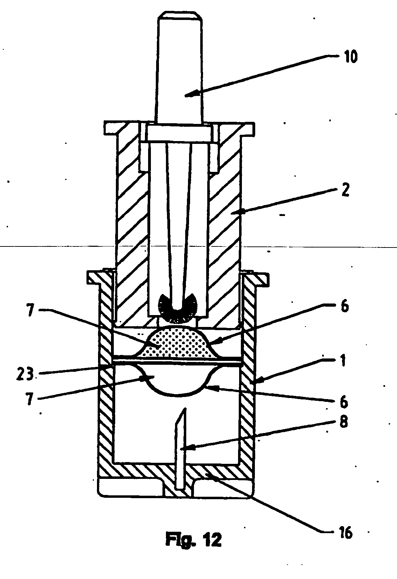

Die erfindungsgemäße Vorrichtung zum Lagern und Applizieren einer ein- oder mehrkomponentigen fließfähigen Substanz (3) besteht aus einem Behälter (1) dessen Öffnung durch ein Gehäuse (2) verschlossen ist (Fig. 1). Das Gehäuse (2) ist wie ein Stempel im Behälter (1) verschiebbar gelagert. Das Gehäuse (2) weist eine Öffnung (4) auf, durch die die zu applizierende Substanz (3) mit Hilfe eines geeigneten Applikationsgerätes entnommen werden kann. Zwischen dem Behälter boden (16) und dem Gehäuse (2) bildet sich ein Innenraum (5) indem auf Preßdruck des Gehäuses (2) sich öffnende oder durchstoßbare Folienbeutel (6) vorhanden sind. Die Folienbeutel (6) enthalten die Komponenten (7) der zu applizierenden Substanz (3). Bei einkomponentigen Substanzen kann die Komponente (7), die dann gleichzeitig die zu applizierende Substanz (3) darstellt, in nur einem oder mehreren Folienbeuteln (6) untergebracht sein. Bei einer mehrkomponentigen Substanz befinden sich die einzelnen Komponenten (7) in verschiedenen Folienbeuteln (6) (Fig.1).
In der einfachsten Ausführungsform braucht der Anwender zur Applikation einer fließfähigen dentalen Substanz aus der erfindungsgemäßen Vorrichtung nur das verschiebbare Gehäuse (2) herunterdrücken. Durch den Druck des Gehäuses (2) auf die Folienbeutel (6), die sich im Innenraum (5) befinden, zerplatzen diese und geben die Komponente(n) (7) in den Innenraum (5) frei (Fig. 1).
Eine bevorzugte Ausführungsform der erfindungsgemäßen Vorrichtung enthält ein oder mehrere Hilfselemente (8), die das Öffnen der Folienbeutel (6) unterstützen (Fig. 6). Diese Hilfselemente können außerhalb der Mittelachse des Behälters (1) bzw. des Gehäuses (2) angebracht sein (Fig. 2 bis 4, 8). Damit wird ein Verstopfen der Öffnung (4) durch Folienbeutelreste oder das Herausdrücken eines Applikationsgerätes (10), wie es in den folgenden Ausführungsformen in der Öffnung lösbar gehalten wird (Fig. 4), vermieden. Die Hilfselemente zum Öffnen (8) der Folienbeutel (6) können spitzenförmig aus dem gleichen Behälter- bzw. Gehäusematerial wie Behälter (1) bzw. Gehäuse (2) gefertigt sein (Fig. 2, 8). Sie können auch im Innenraum (5), d.h. sie sind nicht am Behälter (1) und/oder dem Gehäuse (2) befestigt, vorliegen (Fig. 7). Bevorzugt sind die Hilfselemente (8) aus einem gegenüber dem Behältermaterial härterem Material gefertigt, z.B. aus Metall (Fig. 12), ähnlich einer aufrecht stehenden Nadelspitze. Sie können zudem einen runden, ovalen, eckigen, stern-, sichel- oder rohrförmigen Querschnitt aufweisen (Fig. 10). Diese Formen stellen ein sicheres Zerplatzen der Folienbeutel (6) sicher. Sind die dargestellten Hilfselemente (8) im Innenraum (5) vorhanden, wird das Zerplatzen der Folienbeutel (6) gefördert (Fig. 2 bis 4). Im Innenraum (5) können sich die Komponenten (7) gegebenenfalls vermischen und durch die Öffnung (4) mit einem geeigneten Applikationsgerät (10) aufgenommen und anschließend sofort appliziert werden (Fig. 2 bis 4).
Eine weitere bevorzugte Ausführungsform ergibt sich, wenn im Gehäuse (2) ein Führungsteil (9) angebracht ist, indem das Applikationsgerät (10) einsatzbereit untergebracht ist (Fig. 2, 5). Das Applikationsgerät ist vorteilhafterweise direkt, lösbar in der Öffnung (4) über ein Führungsteil (9) am Gehäuse (2) befestigt (Fig. 5). Das Führungsteil (9) kann aus dem gleichen Material wie das Gehäuse (2), beispielsweise im Spritzgußverfahren in einem Stück, hergestellt werden. Es ergibt sich der Vorteil, daß der Anwender das Applikationsgerät (10) griffbereit zur Hand hat. Er muß nur das Applikationsgerät (10) und damit gleichzeitig das Gehäuse (2) herunterdrücken und kann anschließend sofort die Substanz (3) applizieren. Nach dem vollständigen Zusammendrücken von Behälter (1) und Gehäuse (2) ist der Innenraum (5) durch das heruntergedrückte Gehäuse (2) so stark verkleinert, so daß die fließfähige, zu applizierende Substanz (3) in die Entnahmeöffnung (4) einfließt und dort das befindliche Applikationsgerät (10) benetzt. Auch ergibt sich aus dieser Ausführungsform der Vorteil, daß aus Hygiene- und/oder Sterilitätsgründen bei der Anwendung im zahnmedizinischen Bereich, das Applikationsgerät (10) als Einwegartikel zu gebrauchen ist. Es findet keine Kontamination mit Fremdsubstanzen statt. Durch die direkt Befestigung des Applikationsgerätes an der Applikationsvorrichtung wird eine Kontamination der zu applizierenden Substanz mit der Umgebung ausgeschlossen.
Das Applikationsgerät (10) besteht aus einem Griffabschnitt und einem Applikationskopf, der die zu applizierende Substanz aufnehmen kann. Es kann sich dabei um ein Pinsel, eine Bürste, ein Schaumstoffpelet oder sonstige benetzbare Mittel handeln, die aus dem Stand der Technik, z.B. US 5001803 oder US 5150495 bekannt sind. Beispielsweise setzt sich das Applikationsgerät (10) aus einem an einem Stab befestigten Schaustoffpelet, z.B. Pele Tim der Firma VOCO GmbH, Cuxhaven, zusammen. Bei Verwendung eines Pinsels wird vorteilhafterweise ein Pinselhalter (21) zur Aufnahme des Pinsels und zur Unterstützung beim Herunterdrücken des Gehäuses verwendet (Fig. 2 bis 4). Der Mischvorgang der Komponenten (7) im Innenraum (5) kann durch Rührbewegungen des Applikationsgerätes (10) und/oder durch die Kapillarwirkung der eventuelle am Applikationskopf des Applikationsgerätes befindlichen Bürstenhaare oder Schwammes unterstützt werden. Anschließend kann die Substanz (3) aus dem Behälter (1) mit dem Applikationsgerät (10) heraus appliziert werden.

Am Gehäuse (2) und/oder am Behälter (1) können zusätzliche Dichtvoirichtungen (12) vorhanden sein (Fig. 5). Die Dichtvorrichtungen (12) können flexible Dichtelemente, Dichtlippen oder gummiartige Dichtungen, wie z.B. O-Ringe sein. In diesem Fall empfiehlt es sich, das zusätzlich zur Öffnung (4) Bestandteile (11), z.B. Luftkanäle mit geringem Innendurchmesser, die ein Luftentweichen ermöglichen, ein Austreten der zu applizierenden Substanz aber vermeiden, im Gehäuse (2) und/oder im Behälter (1) angebracht sind. Damit ist eine flüssigkeitsdichte Abdichtung des Innenraumes (5) gegeben.

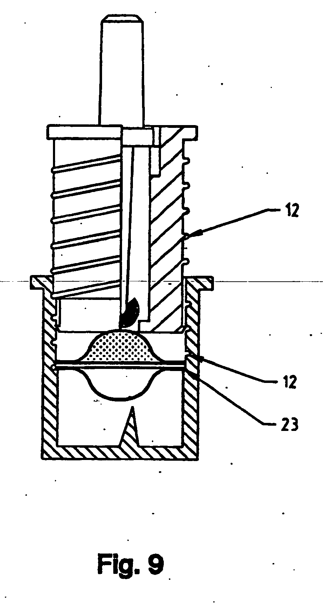

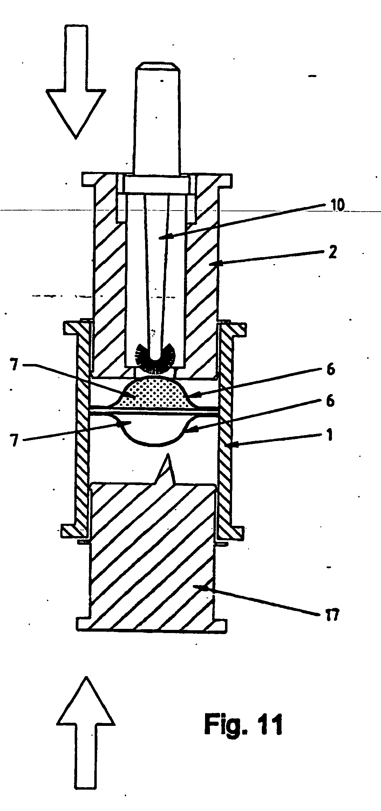

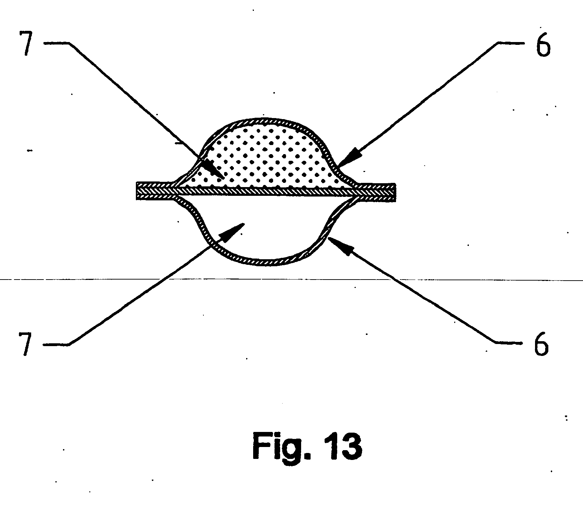

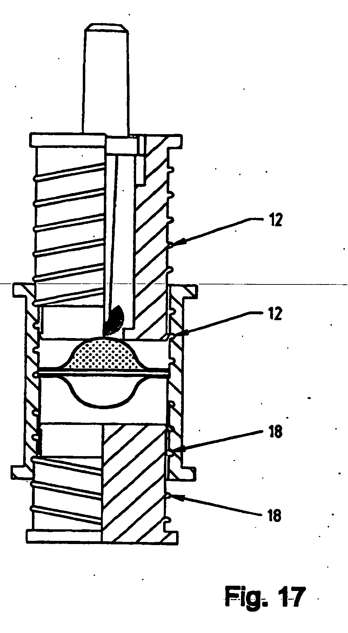

Eine bevorzugte Ausführungsform liegt vor, wenn das Gehäuse (2) durch ein Gewinde (13) am Behälter (1) verschiebbar befestigt ist (Fig. 9). Durch das Ineinanderschrauben des Gehäuses (2) und des Behälters (1) können die Folienbeutel (6) behutsamer zerstört werden. Weiterhin hat ein Gewinde insbesondere bei der Herstellung der erfindungsgemäßen Vorrichtung den Vorteil einer einfachen Montage.
In einer weiteren bevorzugten Ausführungsform sind am Gehäuse (2) Abreißelemente (14) angebracht, die auf und/oder an dem Behälterrand (15) des Behälters (1) an- oder aufliegen können (Fig. 5). Damit wird ein unbeabsichtigtes Herunterdrücken des Gehäuses (2) und damit ein ungewolltes Aktivieren während der Lagerung oder dem Transport der Vorrichtung vermieden. Die Abreißelemente (14) stellen damit einen sogenannten Orginalitätsverschluß dar, an dem der Anwender die Unberührtheit der Vorrichtung und der darin befindlichen Substanz erkennen kann.
Als weitere bevorzugte Ausführungsform kann die erfindungsgemäße Vorrichtung den Behälterboden (16) als verschiebbaren Kolben (17) ausführen (Fig. 11). Somit kann der Anwender beispielsweise die Vorrichtung zwischen Daumen und Zeigefinger plazieren und durch Zusammendrücken des Kolbens (17) und des Gehäuses (2) die Folienbeutel zerplatzen lassen (Fig. 11). Der Kolben (17) kann zudem über ein Gewinde (18) am Behälter (1) befestigt sein (Fig. 17). - Da die zu lagernden Komponenten mitunter Flüssigkeiten mit einem hohen Dampfdruck sind, ist eine hohe Anforderung an die Dichtigkeit der Verpackung zu stellen. Durch die Einschweißung solcher Substanzen in Folienbehälter, die z.B. aus Aluminiumlaminatfolie bestehen, ist eine längere Lagerung ohne Lösungsmittelverlust möglich. Zur besseren Halterung können die Folienbeutel (6) auf einer Auflagekante (23), die an der Behälterinnenwand (1) angebracht ist, aufliegen oder befestigt sein (Fig. 5).
Die beschriebenen Folienbeutel (6) können aus mehrschichtigen Folien und/oder verschiedenen Folienschichten, beispielsweise aus Laminatfolie, Polypropylen, Polyethylen, Aluminium oder anderen versiegelungsfähigem Verbundmaterial, zur Erzielung einer hohen Barrierewirkung gegen Ausdünstungen von Flüssigkeitsbestandteilen aus den Folienbehältern (6) bestehen. Hilfsweise kann eine Sollbruchstelle in den Folien angebracht sein, die ein gezieltes Aufreißen ermöglicht. Derartige Folien und die daraus hergestellten Folienbehälter sind beispielsweise aus DE 2324296 bekannt. Die Folienbeutel können in der Weise gestaltet sein, daß ein Folienbeutel zwei Kammern umfaßt, in denen die Komponenten untergebracht sind. Die Kammern sind dann durch einen einzige gemeinsame Folie voneinander getrennt. Dies hat den Vorteil einer gezielteren und einfacheren Zerstörung der Folienbeutel (Fig. 13).

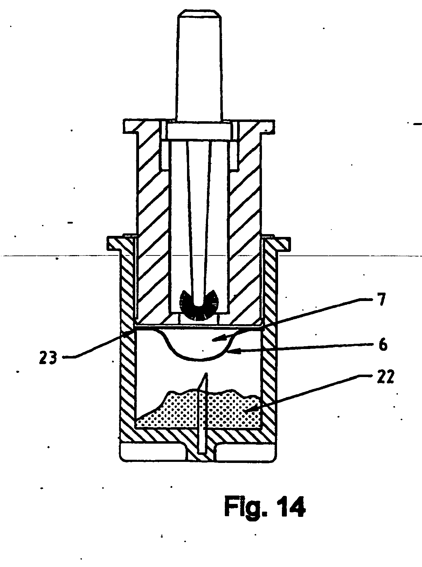

Daneben besteht der Behälter (1) und/oder das Gehäuse (2) aus Kunststoff, mehrschichtigen Kunststoffen, Laminat mit oder ohne Metallbestandteilen und/oder ist als Spritzgußteil gefertigt. Damit wird man den verschiedenen Anforderungen an die Packmitteldichtigkeit (Permeabilität) und der Stabilität der zu lagernden Komponenten gerecht. Auch ist damit eine einfache Herstellung der vorteilhaft aus einem Material zu fertigenden Behältnisse gegeben.
Komponenten, die gasdicht gelagert werden müssen, wie z.B. acetonhaltige Substanzen, werden in den Folienbehältern (6) untergebracht. Komponenten (22), die in einem gasdichten System nicht stabil lagerfähig sind, können direkt im Innenraum (4) des Kunststoffbehälters (1) untergebracht. Somit ist eine den jeweiligen Komponenten angepaßte individuelle Lagerdichtigkeit gewährleistet (Fig. 14).

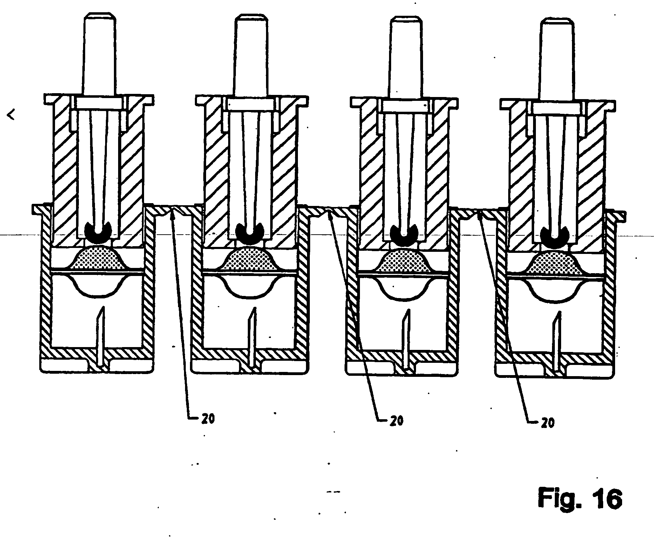

Für die Verwendung der beschriebenen Vorrichtungen im zahnmedizinischen Bereich ist es häufig notwendig, daß nur geringe Mengen, ca. 0,02 bis 0,2 ml, 0,2 bis 1 ml oder 1 bis maximal 10 ml, einer Substanz zu applizieren sind. Aus diesem Grund sind die dargestellten Vorrichtungen in ihren äußeren Maßen diesen geringen Mengen angepaßt, so daß beispielsweise der Behälter (1) ein Innenraumvolumen von 0,1 bis 15 ml aufweisen kann. Die Vorrichtungen sind damit vorteilhaft als Einmalvorrichtungen zu verwenden. Um dem Anwender zu ermöglichen, daß er verschiedene Anwendungen, z.B. mehrere Patienten hintereinander, ein Patient mit mehreren Behandlungstellen oder eine Behandlungstelle größeren Ausmaßes, durchführen kann, können mehrere Vorrichtungen durch Perforationen oder Sollbruchstellen (20) an den Behältern (1) miteinander verbunden sein. Die Behälter sind dann je nach Bedarf an diesen Stellen voneinander lösbar (Fig.16) und direkt einsatzbereit.

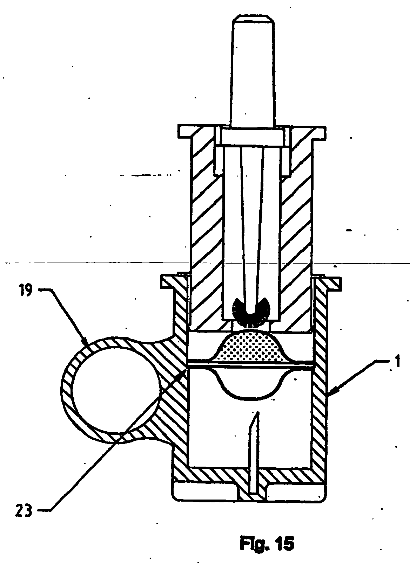

Ein weiterer Vorteil der erfindungsgemäßen Vorrichtung gegenüber nur aus Folienbehältern bestehende Vorrichtung ist, daß der Anwender ein stabiles Behältnis (1) in die Hand nehmen kann, was die Handhabung verbessert. Zur verbesserten Handhabung kann der Behälter (1) mit einer Halterung (19), die ein Ring, ein Clip oder eine sonstige Befestigung sein kann, an einem Finger einer Hand befestigt werden (Fig. 15).

Der Begriff Komponente wird als Bestandteil der zu applizierenden Substanz verstanden und gibt keine Auskunft über die Homogenität der zu applizierenden Substanz. Die Komponenten können Flüssigkeiten, Feststoffe, Pulver oder mikroverkapselte Flüssigkeiten sein, die wiederum aus verschiedenen Ingredienzien zusammengestellt sein können. Die sich bildende Substanz (3) kann verschiedene Konsistenzen von pastös bis flüssig aufweisen und homo- oder heterogen gelöste feste oder gasförmige Bestandteile enthalten. Die sich durch Zusammenbringen, Aktivieren, der Komponenten (7, 22) bildende fließfähige Substanz (3) kann beispielsweise ein dentales Adhäsiv- oder Befestigungssystem sein. Solche bekannten Adhäsivsysteme bestehen beispielsweise aus hydrophilen Methacrylaten (z.B. HEMA), polyfunktionellen Monomeren, Initiatoren, Coinitiatoren und Lösungsmittel, wobei beispielsweise hydrophile Methacrylate, polyfunktionelle Monomere und Lösungsmittel die eine Komponente und hydrophile Methacrylate, Initiatoren und Lösungsmittel die andere Komponente bilden, die jeweils in einem Folienbeutel (6) getrennt gelagert werden. Beim Zusammenbringen, Aktivieren, bildet sich eine fließfähige Substanz (3), das Adhäsivsystem, das auf den zu behandelnden Zahn aufgetragen werden kann und das je nach Initiator/Coinitiator chemisch und/oder durch Lichtbestrahlung anschließend ausgehärtet werden kann. Eine andere bekannte Zusammensetzung eines dentalen Adhäsivs besteht beispielsweise aus Methacrylsäureester der Phosphorsäure als ein Hauptbestandteil der ersten Komponente (7) und aus Wasser oder anderen protischen Lösungsmittel als anderen Hauptbestandteil der zweiten Komponente (7). Beide Bestandteile sind aufgrund der Hydrolyseeigenschaften der Methacrylsäureester zusammen nicht lagerbar. Damit wird noch einmal die geschilderte vorteilhafte Trennung und Lagerung der Komponenten in verschiedenen lagerdichten Materialien, Folie oder Kunststoff, deutlich.
Bei lichthärtenden Substanzen ist es daher notwendig, je nachdem in welcher Komponente sich der Lichtinitiator befindet, daß der Behälter (1) und das Gehäuse (2) und/oder die Folienbeutel (6) lichtundurchlässig sind.

Als weitere bevorzugte Ausführungsform kann eine Komponente (7, 22) aus mikroverkapselter Flüssigkeit bestehen, wie es beispielsweise in DE 19802644 beschrieben ist. Durch das Zusammenfügen der Komponenten im Behälter (1) können die Mikroverkapselungen durch das Zusammendrücken zerstört werden. Die verkapselte Flüssigkeit wird in den Behälter (1) freigesetzt. Sie kann, mit den anderen Komponenten (7) vermischt werden, um dann appliziert zu werden.

Die erfindungsgemäße Vorrichtung ist wie beschrieben einfach zu handhaben und erlaubt ein schnelles, sicheres und gezieltes Applizieren geringer Flüssigkeitsmengen. Insbesondere ist die Herstellung, beispielsweise im Spritzgußverfahren, einfach und auch für hohe Stückzahlen kostengünstig.

Die beschriebenen Vorrichtungen eignen sich insbesondere zum Lagern und Applizieren mehrkomponentiger dentaler Adhäsiv- oder Befestigungssubstanzen. Aber auch für die Lagerung und Applikation von Zahnlacken, fließfähigen Füllungsmaterialien oder Desensitizer ist die erfindungsgemäße Vorrichtung geeignet.

Legende der beschriebenen und in den Zeichnungen dargestellten Vomichtungsbestandteile und Verfahrensschritte:
- 1: Behälter, zur Aufnahme der zu applizierenden Substanz (3) und einem zweiten Behälter (2)
- 2: Gehäuse, das als Stempel im ersten Behälter (1) verschiebbar ist
- 3: zu applizierende ein- oder mehrkomponentige fließfähige Substanz
- 4: Entnahmeöffnung im Gehäuse (2)
- 5: Innenraum, gebildet aus Behälter (1) und Gehäuse (2)
- 6: auf Druck sich öffnende oder durchstoßbare Folienbeutel, die die Komponenten (7) der zu applizierenden Substanz (3) oder, bei einkomponentiger Substanz, diese enthalten
- 7: Komponenten der zu applizierenden Substanz (3)
- 8: Hilfselemente zum Öffnen der Folienbeutel (6), z.B. Dorn, Nadeln
- 9: Führungs- und Halterungsteil zur lösbaren Aufnahme eines Applikationsgerätes (10)
- 10: Applikationsgerät, z.B. Pinsel, Stab mit Schaumstoffpelet
- 11: Bauteile zum Entweichen von Luft und Verhinderung des Austretens von Flüssigkeitsspritzern
- 12: Dichtungsvorrichtungen zwischen Behälter (1) und Gehäuse (2)
- 13: Gewinde zwischen Behälter (1) und Gehäuse (2)
- 14: Abreißelemente am Gehäuse (2)
- 15: Behälterrand des Behälters (1)
- 16: Boden des Behälters (1)
- 17: verschiebbarer Kolben als Boden (16)
- 18: Gewinde zwischen dem verschiebbaren Kolben (17) und Behälter (1)
- 19: Halterung der Vorrichtung zur Befestigung an einem Finger
- 20: Perforationen, Sollbruchstellen
- 21: Pinselhalter
- 22: Komponente der zu applizierenden Substanz (3), die nicht in einem Folienbeutel (6) untergebracht ist
- 23: Auflagekante für Folienbeutel (6)

## Patentansprüche

1. Vorrichtung zum Lagern und Applizieren einer mehrkomponentigen fließfähigen dentalen Substanz (3) bestehend aus einem Behälter (1) und einem Gehäuse (2), das eine Öffnung (4) aufweist, durch die die zu applizierende Substanz (3) mit Hilfe eines Pinsels (10) aufgenommen und entnommen werden kann, und das als Stempel innerhalb des ersten Behälters (1) beweglich geführt ist, wobei der Innenraum (5), gebildet aus dem Behälter (1) und dem Gehäuse (2), ein oder mehrere auf Druck öffnende Folienbeutel (6), die die Komponenten (7) der zu applizierenden Substanz (3) enthalten, enthält, **dadurch gekennzeichnet, daß**
die Öffnung (4) den zur Applikation der gemischten Substanz dienenden Pinsel (10) hält, der zur Entnahme der zu applizierenden Substanz (3) gleichzeitig mit dem Gehäuse (2) in den Behälter (1) eingedrückt wird und dabei die Folienbehälter zerstört werden, wobei der Inhalt der Folienbehälter infolge der durch das Eindrücken kleiner werdenden Mischkammer in den Innenraum der Öffnung (4) fließt, sich dabei vermischt und den Pinsel benetzt.

2. Vorrichtung nach Anspruch 1, **dadurch gekennzeichnet, daß** am Behälter (1) und/oder am Gehäuse (2) in Richtung Innenraum (5) ein oder mehrere Hilfselemente zum Öffnen (8) der Folienbeutel (6) angebracht sind.

3. Vorrichtung nach Anspruch 2, **dadurch gekennzeichnet, daß** die Hilfselemente zum Öffnen (8) der Folienbeutel (6) spitzenförmig aus einem gegenüber dem Behältermaterial härterem Material gefertigt sind.

4. Vorrichtung nach einem der vorhergehenden Ansprüche, **dadurch gekennzeichnet, daß** zwischen dem Behälter (1) und dem Gehäuse (2) eine oder mehrere luft- und/oder flüssigkeitsdichte Dichtungsvonichtungen (12) vorhanden sind.

5. Vorrichtung nach Anspruch 4, **dadurch gekennzeichnet, daß** der Behälter (1) und/oder das Gehäuse (2) mit Bestandteilen (11) ausgestattet sind, die das Entweichen verdrängter Luft aus dem Innenraum (5) erlauben aber das Austreten von Flüssigkeit verhindern.

6. Vorrichtung nach einem der vorhergehenden Ansprüche, **dadurch gekennzeichnet, daß** das Gehäuse (2) mit dem Behälter (1) über ein Gewinde (13) miteinander verbunden ist.

7. Vorrichtung nach einem der vorhergehenden Ansprüche, **dadurch gekennzeichnet, daß** der Behälter (1) und/oder das Gehäuse (2) und/oder die Folienbeutel (6) lichtundurchlässig sind.

8. Vorrichtung nach einem der vorhergehenden Ansprüche, **dadurch gekennzeichnet, daß** die Folienbeutel (6) aus einer mehrschichtigen Folie und/oder verschiedenen Folienschichten zur Erzielung einer hohen Barrierewirkung gegen Ausdünstungen von Flüssigkeitsbestandteilen besteht.

9. Vorrichtung nach einem der vorhergehenden Ansprüche, **dadurch gekennzeichnet, daß** ein Folienbeutel (6) zwei Kammern aufweist, die durch eine gemeinsame Folie voneinander getrennt sind.

10. Vorrichtung nach einem der vorhergehenden Ansprüche, **dadurch gekennzeichnet, daß** die Folienbeutel (6) aus Laminatfolie, Polypropylen, Polyethylen, Aluminium oder einem anderen versiegelungsfähigen Verbundmaterial bestehen.

## Claims

1. Device for storage and application of a fluid dental substance (3) of more than one component, consisting of a container (1), and of a housing (2) that has an opening (4) through which the substance (3) to be applied can be taken up and removed with the aid of a brush (10), and which housing (2) is guided movably as a plunger within the first container (1), and the interior (5), formed by the container (1) and the housing (2), contains one or more film bags (6) that open under pressure and contain the components (7) of the substance (3) to be applied, **characterized in that** the opening (4) holds the brush (10) which is used to apply the mixed substance and which is pressed at the same time as the housing (2) into the container (1) in order to remove the substance (3) to be applied, so that, in so doing, the film containers are destroyed, whereupon the content of the film containers flows into the interior of the opening (4), as a result of the mixing chamber becoming smaller due to the inward pressure, mixes together and wets the brush.

2. Device according to Claim 1, **characterized in that** one or more auxiliary elements (8) for opening the film bag (6) are mounted on the container (1) and/or on the housing (2) in the direction of the interior (5).

3. Device according to Claim 2, **characterized in that** the auxiliary elements (8) for opening the film bag (6) are formed in a pointed configuration from a material that is harder than the material of the container.

4. Device according to one of the preceding claims, **characterized in that** one or more air-tight and/or liquid-tight sealing devices (12) are present between the container (1) and the housing (2).

5. Device according to Claim 4, **characterized in that** the container (1) and/or the housing (2) are equipped with structural arrangements (11) that allow displaced air to escape from the interior (5) but prevent the escape of liquid.

6. Device according to one of the preceding claims, **characterized in that** the housing (2) and the container (1) are connected to one another via a thread (13).

7. Device according to one of the preceding claims, **characterized in that** the container (1) and/or the housing (2) and/or the film bag (6) are impervious to light.

8. Device according to one of the preceding claims, **characterized in that** the film bag (6) is composed of a multi-layer film and/or of different film layers in order to create a high barrier effect against evaporation of liquid components.

9. Device according to one of the preceding claims, **characterized in that** a film bag (6) has two chambers that are separated from one another by a common film.

10. Device according to one of the preceding claims, **characterized in that** the film bags (6) are made of laminate film, polypropylene, polyethylene, aluminium, or another composite material that can be sealed.

## Revendications

1. Dispositif pour stocker et appliquer une substance dentaire coulante multicomposants (3), constitué d'un récipient (1) et d'un boîtier (2) qui présente une ouverture (4) à travers laquelle la substance (3) à appliquer est reçue et peut être prélevée au moyen d'un pinceau (10) et qui est guidé de manière mobile sous forme de poinçon à l'intérieur du premier récipient (1), l'espace interne (5) formé du récipient (1) et du boîtier (2) contenant un ou plusieurs sachets de film (6) s'ouvrant sous l'effet de la pression, qui contiennent les composants (7) de la substance (3) à appliquer,
**caractérisé en ce que**
l'ouverture (4) retient le pinceau (10) servant à l'application de la substance mélangée et qui est enfoncé conjointement avec le boîtier (2) dans le récipient (1) pour prélever la substance à appliquer (3) et ce faisant détruit les récipients de film, le contenu des récipients de film s'écoulant alors dans l'espace interne de l'ouverture (4) du fait de la réduction du volume de la chambre de mélange en raison de l'enfoncement, s'y mélangeant et mouillant le pinceau.

2. Dispositif selon la revendication 1, **caractérisé en ce que** l'on monte sur le récipient (1) et/ou sur le boîtier (2) dans la direction de l'espace interne (5) un ou plusieurs éléments auxiliaires pour ouvrir (8) les sachets de film (6).

3. Dispositif selon la revendication 2, **caractérisé en ce que** les éléments auxiliaires pour l'ouverture (8) des sachets de film (6) sont fabriqués en forme de pointe en un matériau plus dur que le matériau du récipient.

4. Dispositif selon l'une quelconque des revendications précédentes, **caractérisé en ce qu'**entre le récipient (1) et le boîtier (2) sont prévus un ou plusieurs dispositifs d'étanchéité (12) étanches à l'air et/ou aux liquides.

5. Dispositif selon la revendication 4, **caractérisé en ce que** le récipient (1) et/ou le boîtier (2) sont munis d'éléments (11) qui permettent à l'air déplacé de s'échapper de l'espace interne (5) mais qui empêchent les fuites de liquide.

6. Dispositif selon l'une quelconque des revendications précédentes, **caractérisé en ce que** le boîtier (2) est connecté au récipient (1) par un filetage (13).

7. Dispositif selon l'une quelconque des revendications précédentes, **caractérisé en ce que** le récipient (1) et/ou le boîtier (2) et/ou les sachets de film (6) sont imperméables à la lumière.

8. Dispositif selon l'une quelconque des revendications précédentes, **caractérisé en ce que** les sachets de film (6) sont constitués d'un film multicouche et/ou de différentes couches de film pour produire un effet barrière considérable contre les évaporations de constituants liquides.

9. Dispositif selon l'une quelconque des revendications précédentes, **caractérisé en ce qu'**un sachet de film (6) présente deux chambres qui sont séparées l'une de l'autre par un film commun.

10. Dispositif selon l'une quelconque des revendications précédentes, **caractérisé en ce que** les sachets de film (6) se composent de film laminé, de polypropylène, de polyéthylène, d'aluminium ou d'un autre matériau composite scellable.
